# EUROPEAN PATENT SPECIFICATION

(11) **EP 3 779 920 B1**
(45) Date of publication and mention of the grant of the patent: **23.10.2024**
(21) Application number: 19774316.4
(22) Date of filing: 01.02.2019
(51) Int. Cl.: G08G 1/16, B60W 30/08, B60W 40/04, B60W 60/00

(54) **IMAGE PROCESSING DEVICE**
BILDVERARBEITUNGSVORRICHTUNG
DISPOSITIF DE TRAITEMENT D'IMAGE

(30) Priority: 28.03.2018 JP 2018062569
(43) Date of publication of application: 17.02.2021
(73) Proprietor: Kyocera Corporation, Kyoto-shi, Kyoto 612-8501 (JP)
(72) Inventor: FUKUSHIMA Hisanori, Kyoto-shi, Kyoto 612-8501 (JP); MOTEKI Ryosuke, Kyoto-shi, Kyoto 612-8501 (JP); KIJIMA Daisuke, Kyoto-shi, Kyoto 612-8501 (JP); SAITO Nobuhiko, Kyoto-shi, Kyoto 612-8501 (JP)
(74) Representative: Viering, Jentschura & Partner mbB Patent- und Rechtsanwälte
(86) International application number: PCT/JP2019/003719
(87) International publication number: WO 2019/187626

(56) References cited:
- EP-A1- 2 133 851
- EP-A1- 3 269 609
- WO-A1-2018/037954
- JP-A- 2007 188 417
- JP-A- 2010 072 969
- JP-A- 2014 006 700
- JP-A- 2016 216 028
- JP-A- 2017 173 903

## Description

### TECHNICAL FIELD

The present invention relates to an image processing apparatus.

### BACKGROUND

In recent years, research and development have been carried out on fully automatic driving of vehicles. The use of surrounding conditions, as estimated by image analysis of a captured image, in fully automatic driving of vehicles is being studied. For example, it has been proposed to capture the area around a vehicle with an on-vehicle camera and detect the movement speed of the knee position and the movement speed of the upper body position of a pedestrian from images captured by the on-vehicle camera, as in patent literature (PTL) 1. PTL 2 discloses a moving object control device provided with a driving control unit that performs acceleration or deceleration control of the moving object on the basis of the recognition of at least one of a candidate for a person getting on the moving object and a candidate for the person getting off the movable body. This technology can be applied to, for example, a moving object such as a bus or a taxi, or a control device that controls the automatic driving or semi-automatic driving of the moving object. PTL 3 discloses a safety driving support apparatus including a traffic obstacle detection section for detecting a traffic obstacle of the periphery of a vehicle, a speed change induced event detection section for detecting an event of inducing a sudden change in behavior of a pedestrian from a traffic obstacle detected by the traffic obstacle detection section, a speed change detection section for detecting a sudden change in behavior of a pedestrian from a traffic obstacle detected by the traffic obstacle detection section, and a dangerous pedestrian detection section for deciding that the pedestrian is a dangerous pedestrian when the speed change detection section detects a change in behavior of a pedestrian within a certain time from a point in time when a speed change induced event of a pedestrian detected by the speed change induced event detection section occurs. PTL 4 discloses a device according to the preamble of claim 1.

### CITATION LIST

### Patent Literature

PTL 1: JP2010-066810A, PTL 2: WO 2018/037954 A1, PTL 3: EP 2 133 851 A1, PTL 4: EP 3 269 609 A1

### SUMMARY

The present invention provides an image processing apparatus according to claim 1.

Further embodiments are described in the dependent claims.

### BRIEF DESCRIPTION OF THE DRAWINGS

In the accompanying drawings:
FIG. 1 is a functional block diagram illustrating the schematic configuration of a moveable body that includes an image processing apparatus according to the present embodiment;
FIG. 2 is an example of a table illustrating the correspondence relationship between a state history stored in the storage of FIG. 1 and actions to be taken;
FIG. 3 is an example of a table illustrating the correspondence relationship between state and action histories stored in the storage of FIG. 1 and actions to be taken;
FIG. 4 is a flowchart illustrating an action determination process executed by the controller of FIG. 1; and
FIG. 5 is a flowchart illustrating an action update process executed by the controller of FIG. 1.

### DETAILED DESCRIPTION

Embodiments of an image processing apparatus according to the present invention are now described with reference to the drawings.

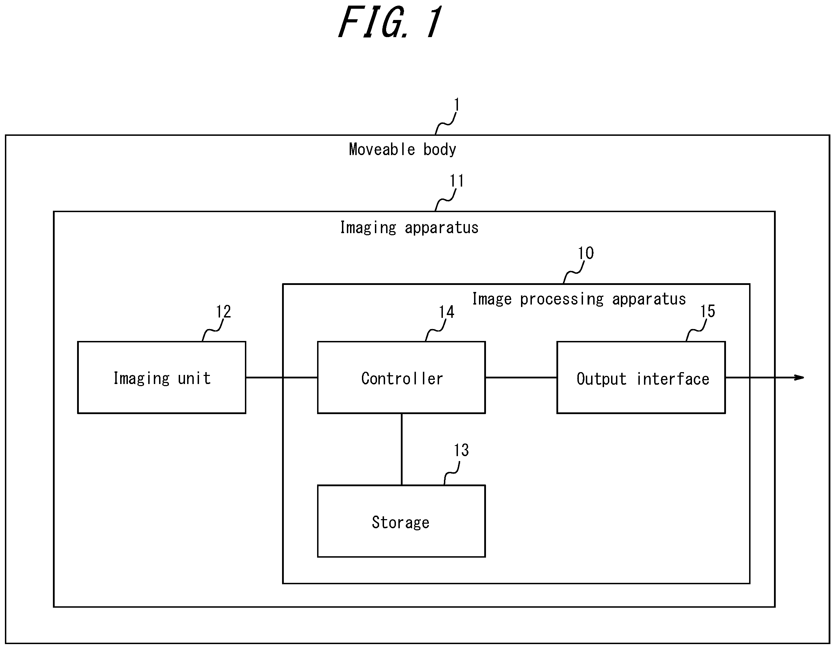

As illustrated in FIG. 1, an imaging apparatus 11 includes an image processing apparatus 10 according to a first embodiment of the present invention. The imaging apparatus 11 is mounted in a moveable body 1, detects the state of an object from a captured image of the surrounding area of the moveable body 1 and the inside of the moveable body 1, and determines an action to be taken by the moveable body 1 in accordance with the detected state of the object.

The moveable body 1 may, for example, encompass vehicles, ships, and aircraft that have an automatic driving function. Vehicles may, for example, include automobiles, industrial vehicles, railway vehicles, vehicles for daily life, and fixed-wing aircraft that run on a runway. Automobiles may, for example, include passenger vehicles, trucks, buses, motorcycles, and trolley buses. Industrial vehicles may, for example, include industrial vehicles for agriculture and for construction. Industrial vehicles may, for example, include forklifts and golf carts. Industrial vehicles for agriculture may, for example, include tractors, cultivators, transplanters, binders, combines, and lawnmowers. Industrial vehicles for construction may, for example, include bulldozers, scrapers, backhoes, cranes, dump cars, and road rollers. Vehicles may include man-powered vehicles. The types of vehicles are not limited to the above examples. For example, automobiles may include industrial vehicles that can be driven on the road. The same vehicle may also be included in multiple categories. Ships may, for example, include marine jets, boats, and tankers. Aircraft may, for example, include fixed-wing aircraft and rotorcraft.

Objects may, for example, include a person, another moveable body, an animal, or the like. Examples of people as objects may include pedestrians and bicyclists.

"Automatic driving" may include automation of a portion or all of user operations for driving a vehicle. For example, automatic driving may include levels 1 through 5 as defined by the Society of Automotive Engineers (SAE). The moveable body 1 is described below as including a fully automatic driving function at level 4 or above as defined by the SAE.

The imaging apparatus 11 includes an imaging unit 12 and the image processing apparatus 10.

The imaging unit 12 is, for example, an on-vehicle camera mounted in the moveable body 1. The imaging unit 12 acquires a captured image of at least one of the surrounding area and the inside of the moveable body 1 and outputs the captured image to the image processing apparatus 10. One or a plurality of imaging units 12 may be included in the imaging apparatus 11. For example, imaging units 12 may be provided at the front, back, left side, and right side of the moveable body 1 and inside the moveable body 1. These imaging units 12 capture images of the surrounding area at the front, back, left, and right of the moveable body 1 and the inside of the moveable body 1.

The imaging unit 12 includes an imaging optical system and an image sensor. For example, the imaging optical system includes one or more lenses, apertures, and the like. The lens included in the imaging optical system is a wide-angle lens such as a fisheye lens, for example. The imaging optical system forms an image of a subject on an optical detection surface of the image sensor. The image sensor includes a charge coupled device (CCD) image sensor, a complementary metal-oxide semiconductor (CMOS) image sensor, or the like, for example. The image sensor generates a captured image by capturing the image of the subject formed on the optical detection surface.

The image processing apparatus 10 includes a storage 13, a controller 14, and an output interface 15.

The storage 13 includes any storage device, such as random access memory (RAM) or read only memory (ROM). The storage 13 stores various programs to be executed by the controller 14 and a variety of information used by the controller 14.

For example, for each object, the storage 13 stores a history of the state of the object (state history) detected by the controller 14, as described below. The state history of the object is, for example, a chronological list of the states of the same object at different detection times.

The controller 14 includes one or more processors and memories. The term "processor" encompasses general-purpose processors that execute particular functions by reading particular programs and dedicated processors that are specialized for particular processing. The dedicated processor may include an application specific integrated circuit (ASIC). The processor may include a programmable logic device (PLD). The PLD may include a field-programmable gate array (FPGA). The controller 14 may be either a system-on-a-chip (SoC) or a system in a package (SiP) with one processor or a plurality of processors that work together.

The controller 14 acquires a captured image from the imaging unit 12. The controller 14 detects an image of an object from the captured image. The controller 14 may detect an image of an object with a known method, such as pattern matching. The controller 14 detects the state of the object when the image of the object was detected from the captured image. The controller 14 detects the state of the object with a known method, such as pattern matching.

Upon detecting the state of the object, the controller 14 stores the state in the storage 13. When an object detected from a captured image that was captured at any time is a newly detected object, the controller 14 stores the state in the storage 13 as the initial state in the state history of the object. When the controller 14 detects the state of an object that was detected in a previous captured image, the controller 14 stores the newly detected state of the object in the storage 13 by including the newly detected state in the state history of the object.

The state may be stored in the history in accordance with various conditions. For example, the controller 14 may store the newly detected state of the object in the storage 13 by including the newly detected state in the state history at fixed time intervals, such as every second. The controller 14 may, for example, judge whether the state of the object has changed and store the newly detected state of the object in the storage 13 by inclusion in the state history when the state has changed.

Along with storage in the state history, the controller 14 may detect an action of the moveable body 1 in which the controller 14 is located ("the corresponding moveable body" below) and store the action in the storage 13 in association with the state history by including the action in an action history of the moveable body 1. The controller 14 accesses various control systems of the moveable body 1 to detect the action of the moveable body 1. As actions of the moveable body 1, the controller 14 for example detects move forward, move backward, stop, decelerate, change course, turn on lights, flash headlights, activate turn signal, honk horn, external display, maintain current state, and the like.

The controller 14 determines an action that is to be taken by the moveable body 1 based on the state history stored in the storage 13. The controller 14 may use various methods to determine the action based on the state history.

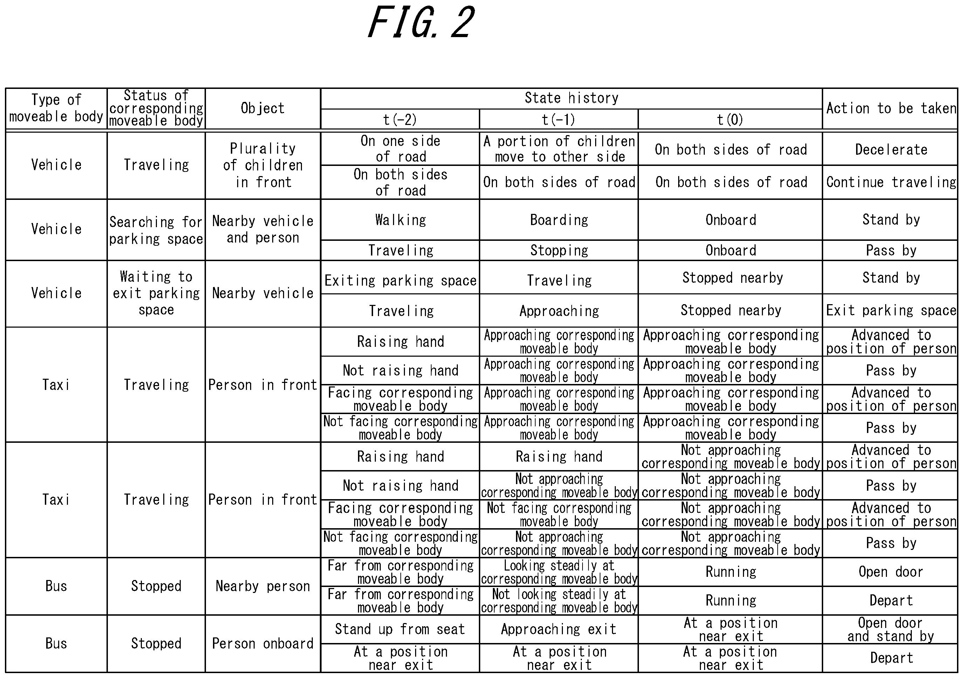

For example, the controller 14 determines the action of the moveable body 1 by a comparing a table and the state history, as illustrated in FIG. 2. The table indicates a predetermined correspondence relationship between each of a variety of state histories of various objects assumed in advance and an action to be taken by the moveable body 1. In the "state history" of the table, the column t(0) indicates the current state. The column t(-1) is an earlier state than t(0), and a particular time interval relative to t(0) need not be established. The column t(-2) is an earlier state than t(-1), and a particular time interval relative to t(-1) need not be established.

When the corresponding moveable body is a vehicle that is traveling, for example, and the controller 14 detects a plurality of children ahead, the controller 14 accumulates the state of the children as objects to create a history. When a plurality of children are present on both sides of the road in the current state, the controller 14 determines different actions in accordance with the state history of the children. A portion of a plurality of children that were originally on one side of the road (see "t(-2)") may, for example, have moved (see "t(-1)") and be present on both sides of the road (see "t(0)"). In the case of this state history, the controller 14 assumes that the probability of other children also crossing the road is high and determines that the action is to decelerate. Children originally present on both sides of the road may, for example, continue in this state (see "t(-2)", "t(-1)", "t(0)"). In this case, the controller 14 assumes that the children have been in different groups from the start and determines that the action is to continue traveling.

When the corresponding moveable body is a vehicle that is searching for a parking space in a parking lot, for example, the controller 14 accumulates the state of nearby vehicles and people as objects to create a history. When a nearby person is onboard a vehicle in the current state, the controller 14 determines different actions in accordance with the state history of the nearby person and vehicle. A nearby person who is walking (see "t(-2)") may, for example, get into a vehicle (see "t(-1)"), thereby transitioning to being onboard the vehicle (see "t(0)"). In the case of this state history, the controller 14 assumes that the probability of the person exiting the parking space is high and determines that the action is to stand by. A nearby vehicle that is traveling (see "t(-2)") may, for example, stop in a parking space (see "t(-1)"), resulting in a state of a person being onboard a vehicle (see "t(0)"). In the case of this state history, the controller 14 assumes that the vehicle has just parked and determines that the action is to pass by the space.

When the corresponding moveable body is a vehicle that is parked and standing by to exit the parking space, for example, the controller 14 accumulates the state of surrounding vehicles as objects to create a history. When a vehicle stops nearby in the current state, the controller 14 determines different actions in accordance with the state history of the nearby vehicle. A nearby vehicle that is exiting the parking space (see "t(-2)") may, for example, start traveling (see "t(-1)") and then stop near the corresponding moveable body (see "t(0)"). In the case of this state history, the controller 14 assumes that the vehicle is a traveling vehicle and determines that the action is to stand by. A nearby vehicle that is traveling (see "t(-2)") may, for example, approach the corresponding moveable body (see "t(-1)") and then stop nearby (see "t(0)"). In the case of this state history, the controller 14 assumes that the vehicle wishes to park in the current parking space of the corresponding moveable body and determines that the action is to exit the parking space.

When the corresponding moveable body is a taxi that is traveling without passengers, for example, the controller 14 accumulates the state of people in front as objects to create a history. When a person in front is approaching the corresponding moveable body in the current state, the controller 14 determines different actions in accordance with the state history of the person in front. For example, when a person in front is approaching the corresponding moveable body in the current state, different actions are determined in accordance with the state history of the person in front. A person in front who is raising a hand or facing the corresponding moveable body (see "t(-2)") may, for example, continue to approach the corresponding moveable body (see "t(-1)", "t(0)"). In the case of this state history, the controller 14 assumes that the person wishes to board the taxi and determines that the action is to advance to the person's position. A person in front who is not raising a hand and not facing the corresponding moveable body (see "t(-2)") may, for example, continue to approach the corresponding moveable body (see "t(-1)", "t(0)"). In the case of this state history, the controller 14 assumes that the person is acting without relation to the corresponding moveable body and determines that the action is to pass by.

When the corresponding moveable body is a taxi that is traveling without passengers, for example, the controller 14 accumulates the state of people in front as objects to create a history. When a person in front is not approaching the corresponding moveable body in the current state, the controller 14 determines different actions in accordance with the state history of the person in front. A person in front who is raising a hand or facing the corresponding moveable body (see "t(-2)") may, for example, not be approaching the corresponding moveable body (see "t(-1)", "t(0)"). In the case of this state history, the controller 14 assumes that the person wishes to board the taxi and determines that the action is to advance to the person's position. A person in front who is not raising a hand and not facing the corresponding moveable body (see "t(-2)") may, for example, not be approaching the corresponding moveable body (see "t(-1)", "t(0)"). In the case of this state history, the controller 14 assumes that the person's actions are unrelated to the corresponding moveable body and determines that the action is to pass by.

When the corresponding moveable body is a bus that is stopped at a bus stop, for example, the controller 14 accumulates the state of nearby people as objects to create a history. When a nearby person is running in the current state, the controller 14 determines different actions in accordance with the state history of the nearby person. A person who is far from the corresponding moveable body (see "t(-2)") may, for example, look steadily at the corresponding moveable body (see "t(-1)") and be running (see "t(0)"). In the case of this state history, the controller 14 assumes that the person wishes to board the bus and determines that the action is to open the door. A person who is far from the corresponding moveable body (see "t(-2)") may, for example, not look steadily at the corresponding moveable body (see "t(-1)") and be running (see "t(0)"). In the case of this state history, the controller 14 assumes that the person is jogging and determines that the action is to depart.

When the corresponding moveable body is a bus that is stopped at a bus stop, for example, the controller 14 accumulates the state of people onboard as objects to create a history. When a person onboard is at a position near the exit in the current state, the controller 14 determines different actions in accordance with the state history of the person onboard. A person onboard who has stood up from his seat (see "t(-2)") may, for example, approach the exit (see "t(-1)") and then stay at a position near the exit (see "t(0)"). In the case of this state history, the controller 14 assumes that the person intends to exit the bus and determines that the action is to open the door and stand by. A person onboard may continue to be at a position near the exit (see "t(-2)", "t(-1)", "t(0)"). In the case of this state history, the controller 14 assumes that the person does not intend to exit the bus and determines that the action is to depart.

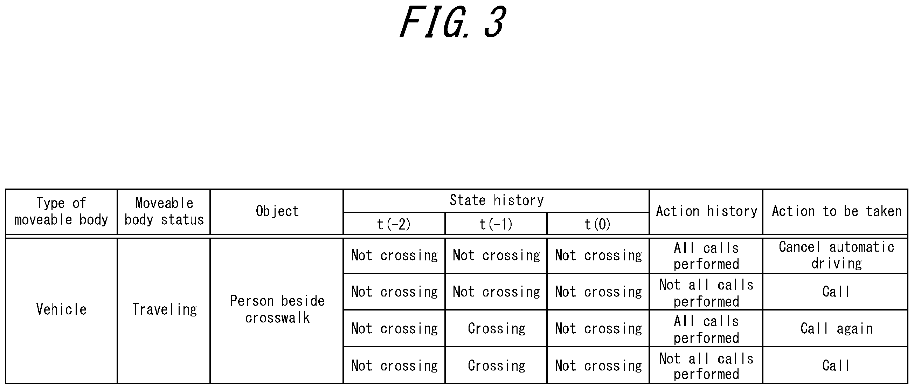

The controller 14 may determine an action that is to be taken by the moveable body 1 based on an action history of the moveable body 1 in addition to the state history stored in the storage 13. The controller 14 may use various methods to determine the action to be taken based on the state and action histories. For example, the controller 14 determines the action of the moveable body 1 by comparing a table and the state and action histories, as illustrated in FIG. 3.

When the corresponding moveable body is a vehicle that is traveling, for example, and the controller 14 detects a person beside a crosswalk in front, the controller 14 accumulates the state of the person as an object and the past actions of the corresponding moveable body to create histories. When a person beside the crosswalk is not crossing in the current state, the controller 14 determines different actions in accordance with the state history of the person and the action history of the corresponding moveable body. A person by the crosswalk may have been stopped by the crosswalk from before (see "t(-2)", "t(-1)", "t(0)"), for example, and among the past actions of the corresponding moveable body, all of the actions predetermined as calls to a pedestrian in front may have been performed. In this case, the controller 14 judges that the intention of the object is unclear and determines that the action is to cancel automatic driving. The actions predetermined as calls are, for example, flash headlights, honk horn, turn on hazard lights, and the like. A person by the crosswalk may not have been crossing until now (see "t(-2)", "t(-1)", "t(0)"), for example, and among the past actions of the corresponding moveable body, all of the actions predetermined as calls to a pedestrian in front may not have been performed. In this case, the controller 14 determines that the action is to perform the calls that have not been performed yet. A person by the crosswalk who was not crossing at first may then have started to cross and subsequently stopped again (see "t(-2)", "t(-1)", "t(0)"), for example, and all of the actions predetermined as calls to a pedestrian in front may have been performed. In this case, the controller 14 judges that the object has some intention of crossing and determines that the action is one of the calls that has been performed. A person by the crosswalk who was not crossing at first may then have started to cross and subsequently stopped again (see "t(-2)", "t(-1)", "t(0)"), for example, and among the past actions of the corresponding moveable body, all of the actions predetermined as calls to a pedestrian in front may not have been performed. In this case, the controller 14 determines that the action is to perform the calls that have not been performed yet.

After outputting information with an instruction to perform the determined action of the corresponding moveable body, the controller 14 may update the table based on the new state of the object in a newly acquired captured image. When the optimal action for the corresponding moveable body to take with respect to the new state of the object differs from the action to take as stored in the table, the controller 14 may update the action to take to become the optimal action.

The output interface 15 outputs, to the moveable body 1, information with an instruction to perform the action of the corresponding moveable body as determined by the controller 14. This information is acquired by each control system that performs actions of the moveable body 1, and the action indicated by the information is performed.

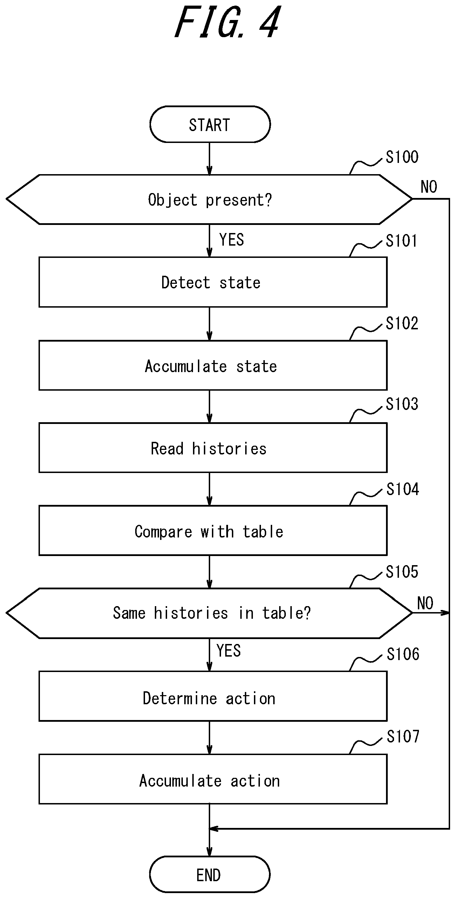

Next, an action determination process that the controller 14 executes based on the state history in the present embodiment is described with reference to the flowchart of FIG. 4. The action determination process begins periodically.

In step S 100, the controller 14 judges whether an object to be detected for the current conditions of the corresponding moveable body is present in the latest captured image acquired from the imaging unit 12. The action determination process ends when no object to be detected is present. The process proceeds to step S101 when an object to be detected is present.

In step S101, the controller 14 detects the state of the object judged to be present in step S 100. After the state is detected, the process proceeds to step S102.

In step S102, the controller 14 stores the state detected in step S101 in the storage 13 and accumulates the state in the state history. After the state is accumulated, the process proceeds to step S103.

In step S103, the controller 14 reads the state history and the action history from the storage 13. After the histories are read, the process proceeds to step S104.

In step S104, the controller 14 compares the state history and action history read in step S 103 with the table stored in the storage 13. After the start of the comparison with the table, the process proceeds to step S105.

In step S 105, the controller 14 judges whether the same histories as the state history and action history read in step S103 are present in the table. The action determination process ends when the same histories are not present in the table. The process proceeds to step S106 when the same histories are present in the table.

In step S106, the controller 14 determines that the action associated with the same histories judged in step S105 is the action to be taken. The controller 14 also outputs the determined action to the moveable body 1 via the output interface 15. After the output to the moveable body 1, the process proceeds to step S107.

In step S107, the controller 14 stores the action determined in step S106 in the storage 13 and accumulates the action in the action history. After the action is accumulated, the action determination process ends.

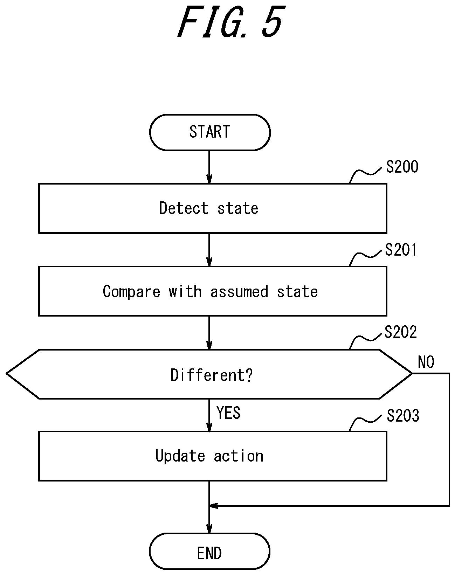

Next, an action update process that the controller 14 executes in the present embodiment is described with reference to the flowchart of FIG. 5. After the action is determined in the action determination process and a new action determination process begins, the action update process begins in parallel with this new action determination process.

In step S200, the controller 14 detects the state of the object, detected in step S100 of the latest action determination process, in the latest captured image acquired from the imaging unit 12. After the state is detected, the process proceeds to step S201.

In step S201, the controller 14 compares the state detected in step S200 with the state assumed to occur next by the histories used to determine the action in step S106 of the latest action determination process. After the start of the comparison, the process proceeds to step S202.

In step S202, the controller 14 judges whether the assumed state and the newly detected state compared in step S201 differ. The action update process ends when the states do not differ, i.e. when the states match. When the states differ, the process proceeds to step S203.

In step S203, the controller 14 updates the action by overwriting the action to take associated with the history in the table with the action to take for the state assumed to occur next by the histories used to determine the action in step S106 of the latest action determination process. The action update processing ends after the action is updated.

In the image processing apparatus 10 of the present embodiment with the above-described configuration, the determination of the action of the moveable body 1 is based on the history of an object. The future state of an object cannot not be uniquely identified from the state of the object at any given time. The above configuration, however, enables the image processing apparatus 10 to improve the estimation accuracy of the future state. Accordingly, the image processing apparatus 10 determines the action of the moveable body 1 using more appropriate criteria, thereby performing automatic driving more appropriately and improving the convenience of transportation.

The image processing apparatus 10 of the present embodiment also includes the newly detected state of the object in the state history at fixed time intervals. Accordingly, the image processing apparatus 10 does not store the state of the object for every captured image. This allows use of a low-volume storage 13.

The image processing apparatus 10 of the present embodiment includes the newly detected state of the object in the state history when the state of the object changes. Accordingly, the image processing apparatus 10 does not store the state of the object for every captured image, nor necessarily at each fixed time interval. This allows use of an even lower-volume storage 13.

In the image processing apparatus 10 of the present embodiment, the determination of the action of the moveable body 1 is also based on the action history. This configuration enables the image processing apparatus 10 to further improve the estimation accuracy of the future state of the object. Accordingly, the image processing apparatus 10 determines the action of the moveable body 1 using even more appropriate criteria, thereby performing automatic driving even more appropriately and improving the convenience of transportation.

The image processing apparatus 10 of the present embodiment can update the table based on the newly detected state of the object after outputting the information with the instruction to perform the action of the moveable body 1. In the table stored in the storage 13, the next state of the object is assumed to be a particular state based on the state history, and an appropriate action is associated in advance with the particular state. The next state of the object may differ from the assumed state, however, depending on local rules of the driving area or the like. The image processing apparatus 10 with the above-described configuration addresses this scenario by being capable of updating the table to optimize the action to be associated with the history.

Although exemplary embodiments have been described with reference to the accompanying drawings, it is to be noted that various changes and modifications will be apparent to those skilled in the art within the scope of the present invention as defined by the claims. Therefore, such changes and modifications are to be understood as included within the scope of the invention as defined by the claims.

While the disclosed apparatus has a variety of modules and/or units for implementing particular functions, these modules and units have only been indicated schematically in order to briefly illustrate the functionality thereof. It should be noted that no particular hardware and/or software is necessarily indicated. In this sense, it suffices for the modules, units, and other constituent elements to be hardware and/or software implemented so as to substantially execute the particular functions described herein. The various functions of different constituent elements may be implemented by combining or separating hardware and/or software in any way, and the functions may each be used individually or in some combination. In this way, the various subject matter disclosed herein may be embodied in a variety of forms, and all such embodiments are included in the scope of the subject matter in the present invention as defined by the claims.

### REFERENCE SIGNS LIST

- 1: Moveable body
- 10: Image processing apparatus
- 11: Imaging apparatus
- 12: Imaging unit
- 13: Storage
- 14: Controller
- 15: Output interface

## Claims

1. An image processing apparatus (10) comprising:
a storage (13);
a controller (14) configured to detect an image of an object from a captured image of at least one of a surrounding area and an inside of a moveable body, store a newly detected state of the object by including the newly detected state in a state history of the object stored in the storage (13), and determine an action of the moveable body based on the state history stored in the storage (13); and
an output interface (15) configured to output to the moveable body information with an instruction to perform the action of the moveable body,
**characterized in that** the controller (14) is configured to update, when a state assumed to occur next by the history used to determine an action of the movable body and a newly detected state differ, an action to take associated with the history to an action to take for the assumed state.

2. The image processing apparatus (10) of claim 1, wherein the controller (14) is configured to store the newly detected state in the state history at fixed time intervals.

3. The image processing apparatus (10) of claim 1 or 2, wherein the controller (14) is configured to store the newly detected state in the state history when the state of the object changes.

4. The image processing apparatus (10) of any one of claims 1 to 3, wherein the controller (14) is configured
to store the action in association with the state history by including the action in an action history of the moveable body stored in the storage (13), and
to determine the action of the moveable body based on the action history stored in the storage (13).

5. The image processing apparatus (11) of any one of claims 1 to 4, wherein the controller (14) is configured to determine the action of the moveable body by comparing the state history with a table indicating a correspondence relationship between each of a variety of state histories of various predetermined objects and a predetermined action to be taken by the moveable body.

6. The image processing apparatus (11) of claim 5, wherein the controller (14) is configured to update the table based on the newly detected state of the object after the controller (14) outputs the information with the instruction to perform the action of the moveable body.

7. An imaging apparatus (11) comprising the image processing apparatus (10) of any one of claims 1 to 6.

8. A moveable body (1) comprising the imaging apparatus (11) of claim 7.

## Patentansprüche

1. Bildverarbeitungsvorrichtung (10), aufweisend:
einen Speicher (13);
einen Controller (14), der konfiguriert ist, um ein Bild eines Objekts aus einem aufgenommenen Bild von mindestens einem von einem Umgebungsbereich und einem Inneren eines bewegbaren Körpers zu detektieren, einen neu detektierten Zustand des Objekts zu speichern, indem der neu detektierte Zustand in eine in dem Speicher (13) gespeicherte Zustandshistorie des Objekts aufgenommen wird, und eine Aktion des bewegbaren Körpers basierend auf der in dem Speicher (13) gespeicherten Zustandshistorie zu ermitteln; und
eine Ausgabeschnittstelle (15), die konfiguriert ist, um an den bewegbaren Körper eine Information mit einer Anweisung auszugeben, um die Aktion des bewegbaren Körpers auszuführen,
**dadurch gekennzeichnet, dass** der Controller (14) konfiguriert ist, um, wenn ein Zustand, von dem angenommen wird, dass er als nächstes auftritt, mittels der Historie, die verwendet wird, um eine Aktion des bewegbaren Körpers zu ermitteln, und ein neu detektierter Zustand sich unterscheiden, eine auszuführende Aktion, die mit der Historie assoziiert ist, zu einer Aktion zu aktualisieren, die für den angenommenen Zustand auszuführen ist.

2. Bildverarbeitungsvorrichtung (10) gemäß Anspruch 1, wobei der Controller (14) konfiguriert ist, um den neu detektierten Zustand in der Zustandshistorie in festen Zeitintervallen zu speichern.

3. Bildverarbeitungsvorrichtung (10) gemäß Anspruch 1 oder 2, wobei der Controller (14) konfiguriert ist, um den neu detektierten Zustand in der Zustandshistorie zu speichern, wenn sich der Zustand des Objekts ändert.

4. Bildverarbeitungsvorrichtung (10) gemäß irgendeinem der Ansprüche 1 bis 3, wobei der Controller (14) konfiguriert ist, um
die Aktion in Verbindung mit der Zustandshistorie zu speichern, indem die Aktion in eine Aktionshistorie des bewegbaren Körpers aufgenommen wird, die in dem Speicher (13) gespeichert ist, und
die Aktion des bewegbaren Körpers basierend auf der in dem Speicher (13) gespeicherten Aktionshistorie zu ermitteln.

5. Bildverarbeitungsvorrichtung (11) gemäß irgendeinem der Ansprüche 1 bis 4, wobei der Controller (14) konfiguriert ist, um die Aktion des bewegbaren Körpers durch Vergleichen der Zustandshistorie mit einer Tabelle, die eine Korrespondenzbeziehung zwischen jeder einer Vielzahl von Zustandshistorien verschiedener vorbestimmter Objekte und einer vorbestimmten, von dem bewegbaren Körper auszuführenden Aktion angibt, zu ermitteln.

6. Bildverarbeitungsvorrichtung (11) gemäß Anspruch 5, wobei der Controller (14) konfiguriert ist, um die Tabelle basierend auf dem neu detektierten Zustand des Objekts zu aktualisieren, nachdem der Controller (14) die Information mit der Anweisung, die Aktion des bewegbaren Körpers auszuführen, ausgibt.

7. Abbildungsvorrichtung (11), aufweisend die Bildverarbeitungsvorrichtung (10) gemäß irgendeinem der Ansprüche 1 bis 6.

8. Bewegbarer Körper (1), aufweisend die Abbildungsvorrichtung (11) gemäß Anspruch 7.

## Revendications

1. Appareil de traitement d'images (10), comprenant :
une mémoire (13) ;
un contrôleur (14) configuré pour détecter une image d'un objet à partir d'une image capturée d'au moins un parmi une zone environnante et un intérieur d'un corps mobile, stocker un état nouvellement détecté de l'objet en incluant l'état nouvellement détecté dans un historique d'état de l'objet stocké dans la mémoire (13), et déterminer une action du corps mobile sur la base de l'historique d'état stocké dans la mémoire (13) ; et
une interface de sortie (15) configurée pour transmettre au corps mobile une information contenant une instruction d'exécution de l'action du corps mobile,
**caractérisé en ce que** le contrôleur (14) est configuré pour mettre à jour, lorsqu'un état supposé se produire ensuite selon l'historique utilisé pour déterminer une action du corps mobile et un état nouvellement détecté diffèrent, une action à entreprendre associée à l'historique en une action à entreprendre pour l'état supposé.

2. Appareil de traitement d'images (10) selon la revendication 1, dans lequel le contrôleur (14) est configuré pour stocker l'état nouvellement détecté dans l'historique d'état à des intervalles de temps fixes.

3. Appareil de traitement d'images (10) selon la revendication 1 ou 2, dans lequel le contrôleur (14) est configuré pour stocker l'état nouvellement détecté dans l'historique d'état lorsque l'état de l'objet change.

4. Appareil de traitement d'images (10) selon l'une quelconque des revendications 1 à 3, dans lequel le contrôleur (14) est configuré pour :
stocker l'action en association avec l'historique d'état en incluant l'action dans un historique d'action du corps mobile stocké dans la mémoire (13), et
déterminer l'action du corps mobile sur la base de l'historique d'action stocké dans la mémoire (13).

5. Appareil de traitement d'images (11) selon l'une quelconque des revendications 1 à 4, dans lequel le contrôleur (14) est configuré pour déterminer l'action du corps mobile en comparant l'historique d'état avec un tableau indiquant une relation de correspondance entre chacun d'une variété d'historiques d'état de divers objets prédéterminés et une action prédéterminée à entreprendre par le corps mobile.

6. Appareil de traitement d'images (11) selon la revendication 5, dans lequel le contrôleur (14) est configuré pour mettre à jour le tableau sur la base de l'état nouvellement détecté de l'objet après que le contrôleur (14) émet l'information avec l'instruction d'entreprendre l'action du corps mobile.

7. Appareil d'imagerie (11) comprenant l'appareil de traitement d'images (10) selon l'une quelconque des revendications 1 à 6.

8. Corps mobile (1) comprenant l'appareil d'imagerie (11) selon la revendication 7.
